# EUROPÄISCHE PATENTSCHRIFT

(11) **EP 2 130 718 B1**
(45) Veröffentlichungstag und Bekanntmachung des Hinweises auf die Patenterteilung: **26.02.2020**
(21) Anmeldenummer: 09161221.8
(22) Anmeldetag: 27.05.2009
(51) Int. Cl.: B60Q 1/10

(54) **Verfahren und Vorrichtung zum Steuern der Lichtabgabe mindestens eines Frontscheinwerfers eines Fahrzeugs**
Method and device for controlling the light emission of at least one front headlamp of a vehicle
Procédé et dispositif de commande de l'émission de lumière d'au moins un phare frontal d'un véhicule

(30) Priorität: 30.05.2008 DE 102008025948
(43) Veröffentlichungstag der Anmeldung: 09.12.2009
(73) Patentinhaber: HELLA GmbH & Co. KGaA, 59552 Lippstadt (DE)
(72) Erfinder: Hoffmann, Ingo, 10437, Berlin (DE); Klebanov, Boris, 13509, Berlin (DE)
(74) Vertreter: Schaumburg und Partner Patentanwälte mbB

(56) Entgegenhaltungen:
- EP-A1- 0 642 950
- EP-A1- 1 920 970
- FR-A1- 2 848 161

## Beschreibung

Die Erfindung betrifft ein Verfahren und eine Vorrichtung zum Steuern der Lichtabgabe mindestens eines Frontscheinwerfers eines Fahrzeugs, bei denen die Lichtabgabe abhängig von einem Nickwinkel des Fahrzeugs gesteuert wird. Solche Verfahren und Vorrichtungen dienen insbesondere zur Regelung der Leuchtweite eines Kraftfahrzeugs. Ein System zur Regelung der Leuchtweite eines Kraftfahrzeugs ist beispielsweise aus dem Dokument EP 1 078 814 A2 bekannt. Bei diesem System hat das Fahrzeug einen Vorderachsgeber und einen Hinterachsgeber, die jeweils Signale in Abhängigkeit der Lage der Fahrzeugkarosserie zur Vorder- und Hinterachse des Fahrzeugs erzeugen. Abhängig von diesen Signalen wird die Leuchtweite der Frontscheinwerfer des Kraftfahrzeugs eingestellt.

Das Erfassen der Lage der Fahrzeugkarosserie mit Hilfe der Vorderachsengeber und Hinterachsengeber bietet jedoch den Nachteil, dass nur die relative Bewegung zwischen den Fahrzeugachsen und der Fahrzeugkarosserie erfasst werden kann und nicht die Drehung der Fahrzeugkarosserie um eine Y-Achse des Fahrzeugkoordinatensystems. Ein solches Fahrzeugkoordinatensystem wird auch als fahrzeugfestes Koordinatensystem bezeichnet und ist ein rechtwinkliges Rechtssystem mit einem beliebigen Koordinatenursprung im Fahrzeug. Dieser Koordinatenursprung kann beispielsweise in die Mitte der Vorderachse oder in den Schwerpunkt des Fahrzeugs gelegt werden, sodass die X-Achse waagerecht nach vorne in Fahrrichtung zeigt und sich in der Fahrzeuglängsmittelebene des Fahrzeugs befindet. Die Y-Achse steht senkrecht auf der Fahrzeuglängsmittelebene und zeigt in Fahrtrichtung gesehen nach links. Die Z-Achse zeigt in Fahrtrichtung gesehen nach oben. Abhängig von der Neigung der Kraftfahrzeugkarosserie in Folge unebener Fahrbahn sowie Brems- und Beschleunigungsvorgänge sowie abhängig von der Beladung oder einer sich ändernden Beladung des Fahrzeugs erfolgt eine Nickbewegung des Fahrzeugs, d. h. das Fahrzeug wird um eine Y-Achse des Fahrzeugkoordinatensystems gedreht, sodass die Längsachse der Karosserie des Fahrzeugs nicht parallel zur X-Achse des Fahrzeugkoordinatensystems ausgerichtet ist sondern die X-Achse in einem Winkel, dem sogenannten Nickwinkel, schneidet.

Das Dokument EP 1 920 970 A1 offenbart ein System zur Korrektur der Ausrichtung einer Lichtquelle eines Fahrzeugs in Abhängigkeit der Niveaulage dieses Fahrzeugs. Eine im Fahrzeug montierte Kamera dient zum Erfassen einer Reihe aufeinanderfolgender Bilder einer vor oder nach dem Fahrzeug liegenden Straßenszene. Es wird erster im Stillstand oder durch Mittelwertbildung erzeugter Informationssatz ermittelt. Eine Einheit verarbeitet die von der Kamera erfassten Bilder, wobei die Einheit einen zweiten Informationssatz in Bezug auf eine Messung der Abweichung einer Ausrichtung der erfassten Bilder erzeugt. Der erste und der zweite Informationssatz werden miteinander kombiniert und eine Niveaukorrekturinformation erzeugt. Dazu werden von der Lichtquelle spezielle Lichtpunkte ausgesendet, die in den Aufnahmebildern detektiert und ausgewertet werden.

Das Dokument EP 0 642 950 A1 offenbart eine Vorrichtung zur automatischen Einstellung der Scheinwerfer eines Kraftfahrzeugs in Abhängigkeit der Neigungsänderung der Fahrzeugkarosserie. Mit Hilfe einer Videokamera des Fahrzeugs, die auf dem Bereich vor dem Fahrzeug ausgerichtet ist, wird eine Information über die Rückstrahlung des Scheinwerferlichts durch die Fahrbahn ermittelt. Mit Hilfe dieser ermittelten Information über die Rückstrah lung des Fahrzeuglichts und gespeicherten Referenzinformationen wird die Veränderung der Ausrichtung der von den Scheinwerfern abgestrahlten Lichtbündel in Verhältnis zu einer Referenzausrichtung bestimmt und Steuersignale zum Ansteuern der Scheinwerfer erzeugt.

Das Dokument FR 2 848 161 A1 offenbart eine Vorrichtung und ein Verfahren zum Einstellen der Höhenausrichtung eines Kraftfahrzeugscheinwerfers mit einer an einem beweglichen Reflektor befestigten Lichtquelle. An dem beweglichen Reflektor ist eine Kamera angebracht, die Aufnahmen des Bereichs vor dem Fahrzeug macht. Eine die Bilddaten der Kamera verarbeitende Bildverarbeitungseinheit bestimmt eine Horizontlinie und vergleicht diese mit einer voreingestellten Horizontlinie. Eine Steuereinheit steuert die Fahrzeugscheinwerfer derart an, dass sich die ermittelte Horizontlinie der voreingestellten Horizontlinie annähert.

Aufgabe der Erfindung ist es, ein Verfahren und eine Vorrichtung zum Steuern der Lichtabgabe mindestens eines Frontscheinwerfers eines Fahrzeugs anzugeben, bei denen eine Behinderung anderer Verkehrsteilnehmer auf einfache Art und Weise vermieden wird.

Diese Aufgabe wird durch ein Verfahren mit den Merkmalen des Patentanspruchs 1 sowie durch eine Vorrichtung mit den Merkmalen des unabhängigen Vorrichtungsanspruchs gelöst. Vorteilhafte Weiterbildungen der Erfindung sind in den abhängigen Patentansprüchen angegeben.

Durch ein Verfahren mit den Merkmalen des Patentanspruchs 1 und durch eine Vorrichtung mit den Merkmalen des unabhängigen Vorrichtungsanspruchs wird erreicht, dass eine Nickwinkeländerung des Fahrzeugs auf einfache Art ermittelt wird und bei der Lichtabgabe des mindestens einen Frontscheinwerfers berücksichtigt werden kann. Hierbei wird die Positionsabweichung der Bildposition des Objekts, die aus der Bewegung des Fahrzeugs in Fahrtrichtung zwischen den Bildaufnahmezeitpunkten von zwei nacheinander aufgenommenen Bildern der Bildfolge resultiert, ermittelt. Diese Positionsabweichung wird beim Ermitteln der Nickwinkeländerung des Fahrzeugs bzw. beim Ermitteln einer Positionsabweichung zwischen den Positionen des Objekts in den Bildern berücksichtigt. Dabei ist es vorteilhaft, die Positionsabweichung der Bildposition des Objekts, die aus der Bewegung des Fahrzeugs in Fahrtrichtung zwischen den Bildaufnahmezeitpunkten von zwei nacheinander aufgenommenen Bildern der Bildfolge resultiert, als Korrekturwert beim Ermitteln einer Positionsabweichung zwischen den Positionen des Objekts zwischen den Bildaufnahmezeitpunkten der beiden oder von jeweils zwei Bildern verwendet wird. Dadurch erfolgt eine von der Fahrzeugbewegung in X-Achse des Fahrzeugkoordinatensystems unabhängige Ermittlung der Positionsabweichung der Bildposition des Objekts zwischen den Bildern.

Dadurch können Fehler infolge unbekannter oder nicht korrekter Nickwinkeländerungen durch ein Lichtassistenzsystem zum Ansteuern der Frontscheinwerfer eines Fahrzeugs vermieden werden. Bei detektierten Nickwinkeländerungen, die zu einer Blendung anderer Verkehrsteilnehmer führen können, kann eine zusätzliche Ausleuchtung des Bereichs vor dem Fahrzeug, d. h. eine Anhebung der horizontalen Hell-Dunkel-Grenze reduziert oder auf ein standardmäßiges Abblendlicht zurückgeschaltet werden, sodass andere Verkehrsteilnehmer nicht geblendet werden. Ein solches Anheben der horizontalen Hell-Dunkel-Grenze zur Verbesserung der Ausleuchtung des Bereichs vor dem Fahrzeug wird auch als adaptive Lichtsteuerung bezeichnet.

Alternativ kann die detektierte Nickwinkeländerung dazu genutzt werden, das Lichtassistenzsystem defensiv zu parametrisieren, sodass sichergestellt wird, dass auch bei einer zusätzlichen Ausleuchtung des Bereichs vor dem Fahrzeug durch Anheben der horizontalen Hell-Dunkel-Grenze andere Verkehrsteilnehmer nicht geblendet werden.

Durch ein Verfahren, das aber nicht Teil der Erfindung ist, ist es bei entsprechend häufiger wiederholter Erfassung der Nickwinkeländerung auch möglich, die Nickbewegung des Fahrzeugs durch eine entsprechende Ansteuerung der Frontscheinwerfer hochdynamisch auszugleichen und somit den Lichtabstrahlwinkel in Bezug auf die waagerechte X-Achse des Fahrzeugkoordinatensystems konstant zu halten.

Bei einer Weiterbildung der Erfindung wird ausgehend von mindestens drei nacheinander als Bildfolge aufgenommenen Bildern mit Hilfe der in den Bildern ermittelten Position des Objekts im jeweiligen Bild je eine Nickwinkeländerung des Fahrzeugs zwischen den Bildaufnahmezeitpunkten der jeweiligen Bilder ermittelt. Dabei ist es vorteilhaft, ausgehend von den mindestens zwei ermittelten Nickwinkeländerungen den Verlauf der Nickwinkeländerung, mindestens eine Amplitude eines Schwingungsverlaufs des Nickwinkels, den Verlauf der Amplitude des Schwingungsverlaufs der Nickwinkeländerung oder die maximale Amplitude des Schwingungsverlaufs der Nickwinkeländerung zu ermitteln. Durch diese Größen ist jeweils eine präzise Aussage über die Nickwinkeländerung bzw. den Verlauf der Nickwinkeländerung des Fahrzeugs möglich. Diese ermittelten Größen können bei der Lichtsteuerung der Lichtabgabe der Frontscheinwerfer berücksichtigt werden, sodass je nach verfügbaren Einstellmöglichkeiten der Frontscheinwerfer eine geeignete Einstellung dieser Frontscheinwerfer erfolgen kann und eine Behinderung anderer Verkehrsteilnehmer wirkungsvoll vermieden wird.

Ferner ist es vorteilhaft, zum Ermitteln der Nickwinkeländerung oder zur Überprüfung der Plausibilität einer ermittelten Nickwinkeländerung Fahrzeugdaten zu verarbeiten. Diese Fahrzeugdaten können Informationen über die Betätigung des Gaspedals, die Betätigung des Bremspedals, die Stoßdämpferbewegung mindestens eines Stoßdämpfers des Fahrzeugs, die Fahrzeuggeschwindigkeit, die Beschleunigungs- und/oder Verzögerungswerte des Fahrzeugs umfassen. Dadurch kann die Genauigkeit der Bestimmung der Nickwinkeländerung erhöht oder eine ermittelte Nickwinkeländerung verifiziert werden.

Bei einer weiteren vorteilhaften Weiterbildung der Erfindung wird in einem ersten Bild der erfassten Bildfolge ein Objekt detektiert und klassifiziert. Ein Objektverfolgungsverfahren wird für das Objekt nur dann gestartet, wenn das Objekt als ortsfestes Objekt oder als Objekt mit einer detektierbaren Bewegung klassifiziert worden ist. Ein Objekt mit einer detektierbaren Bewegung ist beispielsweise ein entgegenkommendes oder vorausfahrendes Fahrzeug. Dadurch wird sichergestellt, dass die relative Fahrzeugbewegung zum Objekt mit Hilfe der erfassten Bilder ermittelt werden kann.

Weiterhin ist es vorteilhaft, dass eine Bilderfassungseinheit kontinuierlich Bilder eines Bereichs vor dem Fahrzeug als Bildfolge erfasst und zumindest einen Teil der Bilddaten dieser Bilder zur Ermittlung deren Nickwinkeländerung bzw. der Nickbewegung des Fahrzeugs verarbeitet werden.

Bei einer anderen Weiterbildung ist als Position des Objekts die Änderung der Position der Abbildung des Objekts auf einer eine X-Achse und eine Y-Achse aufweisenden Matrix eines Bilderfassungssensors der Bilderfassungseinheit ermittelt worden, wobei die Positionsänderung des Objekts in Richtung der Y-Achse des Bilderfassungssensors ermittelt wird. Das Koordinatensystem des Bilderfassungssensors und das Fahrzeugkoordinatensystem sind aufeinander kalibriert, so dass sie eine bekannte Lage zueinander haben. Die Y-Achse des Bilderfassungssensors stimmt mit der Z-Achse eines Fahrzeugkoordinatensystems überein oder die Lage der Y-Achse des Bilderfassungssensors und der Z-Achse eines Fahrzeugkoordinatensystems zueinander ist bekannt. Gegebenenfalls lässt sich der Betrag des Winkels zwischen der Y-Achse des Bilderfassungssensors und der Z-Achse eines Fahrzeugkoordinatensystems und/oder allgemein die Lage des Kamerakoordinatensystems bezüglich des Fahrzeugkoordinatensystems bestimmen. Vorzugsweise erfolgt das Bestimmen der Lage dieser Koordinatensysteme zueinander und/oder das Bestimmen des Winkels zwischen der Y-Achse des Bilderfassungssensors der Bilderfassungseinheit und der Z-Achse des Fahrzeugkoordinatensystems aus bekannten Kalibrierdaten des Kamerasystems. Dadurch kann die für das Bestimmen der Nickwinkeländerung des Fahrzeugs relevante Relativbewegung zwischen Objekt und Fahrzeug bzw. zwischen Objekt und Bilderfassungseinheit unter Berücksichtigung der Entfernung des Objekts einfach dadurch ermittelt werden, dass nur die Positionsabweichung in Richtung der Y-Achse des Bilderfassungssensors bzw. in Z-Achse des Fahrzeugkoordinatensystems erfasst wird.

Erfindungsgemäß wird der Abstrahlwinkel der von den Frontscheinwerfern abgestrahlten Lichtstrahlen auf einen voreingestellten Wert abgesenkt, bei dem auch bei einer üblichen Nickwinkeländerung bzw. bei einer üblichen Nickbewegung des Fahrzeugs keine Beeinträchtigung anderer Verkehrsteilnehmer zu erwarten sind. Insbesondere können die vom Frontscheinwerfer abgestrahlten Lichtstrahlen der Lichtverteilung eines normalen Abblendlichts entsprechen, sodass dann keine zusätzliche Ausleuchtung des Bereichs vor dem Fahrzeug erfolgt, solange eine Nickwinkeländerung über einem voreingestellten Sollwert detektiert wird. Alternativ oder zusätzlich kann abhängig von der ermittelten Nickwinkeländerung die durch die Lichtabstrahlung der Frontscheinwerfer des Fahrzeugs bewirkte horizontale Hell-Dunkel-Grenze derart dauerhaft abgesenkt werden, dass eine voreingestellte Hell-Dunkel-Grenze auch der größten in einem voreingestellten Zeitraum ermittelten Amplitude der Schwingung des Nickwinkels nicht überschritten wird. Dadurch wird erreicht, dass auch bei der detektierten Nickbewegung eine zusätzliche Ausleuchtung des Bereichs vor dem Fahrzeug möglich ist, ohne dass andere Verkehrsteilnehmer behindert werden, da die voreingestellte horizontale Hell-Dunkel-Grenze, die vorzugsweise auf das Fahrzeugkoordinatensystem bezogen ist, nicht überschritten wird. Diese voreingestellte Hell-Dunkel-Grenze kann zusätzlich abhängig von der Verkehrssituation festgelegt und voreingestellt werden. Insbesondere kann die voreingestellte horizontale Hell-Dunkel-Grenze abhängig von den Positionen anderer Verkehrsteilnehmer, insbesondere von vorausfahrenden und entgegenkommenden Fahrzeugen, festgelegt werden. Dabei ist es vorteilhaft, wenn die voreingestellte horizontale Hell-Dunkel-Grenze in Höhe der Rückleuchten eines vorausfahrenden Fahrzeugs oder in Höhe der Frontscheinwerfer eines entgegenkommenden Fahrzeugs liegt.

Bei einer alternativen Ausführungsform wird mit Hilfe mehrerer fortlaufender erfasster Bilder der Schwingungsverlauf des Nickwinkels ermittelt. Der mindestens eine Frontscheinwerfer des Fahrzeugs wird so angesteuert, dass die durch die vom Frontscheinwerfer abgestrahlten Lichtstrahlen erzeugte horizontale Hell-Dunkel-Grenze nicht oder nur in einem zulässigen Bereich von einer voreingestellten horizontalen Hell-Dunkel-Grenze abweicht.

Das Verfahren und die Vorrichtung können besonders vorteilhaft bei Straßenfahrzeugen eingesetzt werden. Die durch den unabhängigen Vorrichtungsanspruch spezifizierte Vorrichtung kann in gleicher Weise weitergebildet werden, wie das Verfahren nach Anspruch 1. Insbesondere kann die Vorrichtung mit den in den abhängigen Patentansprüchen angegebenen Merkmalen bzw. durch entsprechende Vorrichtungsmerkmale weitergebildet werden.

Als Bilderfassungseinheit eignet sich insbesondere eine bekannte Fahrzeugkamera. Die Bilderfassungseinheit kann insbesondere eine monokulare Kamera, mehrere monokulare Kameras, ein Stereokamerasystem oder mehrere Stereokamerasysteme umfassen, wobei die einzelnen Kameras Bilddaten von Graustufenbildern oder Farbbildern erzeugen. Besonders vorteilhaft ist die Verwendung einer Kamera mit mindestens einem CMOS-Bilderfassungssensor, der vorzugsweise Graustufenbilder erzeugt. Beispielsweise hat die Bilderfassungseinheit einen Active-Pixel-Sensor als Bilderfassungssensor.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: eine schematische Seitenansicht einer Verkehrssituation mit zwei Fahrzeugen, wobei das hinter dem ersten Fahrzeug fahrende zweite Fahrzeug ein System zur Steuerung der Frontscheinwerfer zur veränderlichen Einstellung der horizontalen Hell-Dunkel-Grenze hat;
- Figur 2: eine schematische Darstellung der Lichtabstrahlung des zweiten Fahrzeugs ohne eine Ansteuerung der Frontscheinwerfer zur Veränderung der horizontalen Hell-Dunkel-Grenze in verschiedenen Phasen einer Nickbewegung des zweiten Fahrzeugs nach Figur 1;
- Figur 3: eine schematische Darstellung der Lichtabstrahlung des zweiten Fahrzeugs bei einer defensiven Einstellung der Steuerung der Frontscheinwerfer zur Veränderung der horizontalen Hell-Dunkel-Grenze in den verschiedenen Phasen der Nickbewegung des zweiten Fahrzeugs nach Figur 2;
- Figur 4: eine schematische Darstellung der Lichtabstrahlung des zweiten Fahrzeugs bei einer Einstellung der Steuerung der Frontscheinwerfer zur Veränderung der horizontalen Hell-DunkelGrenze, bei der die horizontale Lichtabstrahlung um den Betrag der Nickwinkelamplitude reduziert wird, in verschiedenen Phasen der Nickbewegung nach Figur 2; und
- Figur 5: eine schematische Darstellung der Lichtabstrahlung des zweiten Fahrzeugs bei einer hochdynamischen Einstellung der Steuerung der Frontscheinwerfer zur Veränderung der horizontalen Hell-Dunkel-Grenze, um die Nickbewegung in verschiedenen Phasen eines Nickvorgangs nach Figur 2 auszugleichen. Diese Variante ist aber nicht Teil der Erfindung.

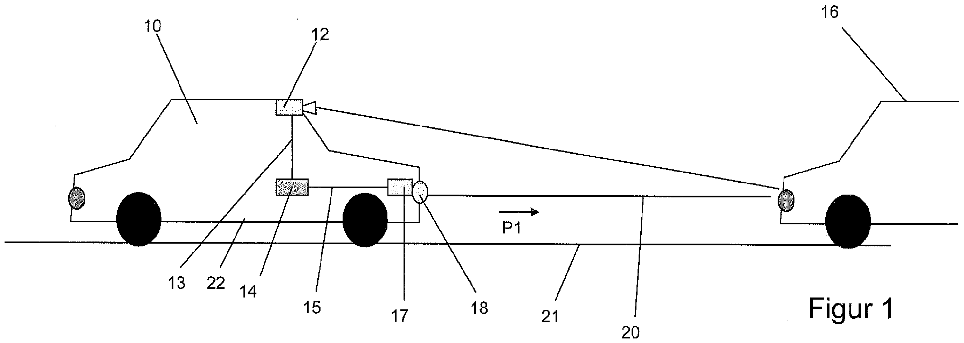

In Figur 1 ist eine schematische Seitenansicht einer Verkehrssituation mit zwei Fahrzeugen dargestellt. Das hinter dem ersten Fahrzeug 16 fahrende zweite Fahrzeug 10 hat ein System zur Ansteuerung der Frontscheinwerfer 18, die eine veränderliche Einstellung der horizontalen Hell-Dunkel-Grenze 20 ermöglicht. Das zweite Fahrzeug 10 umfasst eine Frontkamera 12, die Bilddaten von Bildern mit Abbildungen eines Bereichs vor dem Fahrzeug 10 erzeugt. Die Kamera 12 ist über eine Datenleitung 13 mit einer Steuereinheit 14 verbunden. Die von der Kamera 12 erzeugten Bilddaten werden mit Hilfe eines durch die Steuereinheit 14 bereitgestellten Bildverarbeitungssystems verarbeitet, wobei Abbildungen relevanter Objekte in den Bildern detektiert werden. Solche relevante Objekte sind insbesondere Frontscheinwerfer und Rückleuchten anderer Fahrzeuge, deren Fahrzeugführer von dem durch die Frontscheinwerfer 18 des Fahrzeugs 10 emittierten Lichtstrahlen geblendet und somit gefährdet werden könnten. Im Ausführungsbeispiel nach Figur 1 ist ein solches relevantes Objekt das auf der gleichen Fahrspur vorausfahrende erste Fahrzeug 16. Weitere relevante Objekte können aber auch entgegenkommende Fahrzeuge sein.

Die Steuereinheit 14 ist weiterhin über eine zweite Datenleitung 15 mit Lichtsteuermodulen 17 verbunden. Den Frontscheinwerfern 18 des Fahrzeugs 10 ist jeweils ein Lichtsteuermodul 17 zugeordnet. Die Steuereinheit 14 gibt den Lichtsteuermodulen 17 eine Lichtverteilung für den dem jeweiligen Lichtsteuermodul 17 zugeordneten Frontscheinwerfer 18 vor. Die Lichtsteuereinheiten 17 steuern den ihnen zugeordneten Frontscheinwerfer 18 oder die ihnen zugeordneten Frontscheinwerfer 18 derart an, dass das von ihm bzw. ihnen abgestrahlte Licht die gewünscht vorgegebene Lichtverteilung erzeugt. Dazu aktivieren die Lichtsteuereinheiten 17 die erforderlichen Lichtquellen der Frontscheinwerfer 18 und/oder Aktoren der Frontscheinwerfer 18 zum Einstellen des Abstrahlwinkels des abgestrahlten Lichts. Dadurch wird die Lichtabgabe der Frontscheinwerfer 18 des Fahrzeugs 10 so gesteuert, dass der Fahrer des ersten Fahrzeugs 16 nicht geblendet wird. Hierzu wird die horizontale Hell-Dunkel-Grenze 20 ausreichend in Richtung der Fahrbahn 21 abgesenkt. Die horizontale Hell-Dunkel-Grenze ist im Ausführungsbeispiel schematisch durch die Linie 20 dargestellt und gibt die horizontale Grenze des vom Scheinwerfer 18 ausgestrahlten Lichtes an. Ein Anheben der horizontalen Hell-Dunkel-Grenze 20 bewirkt eine Vergrößerung der Reichweite des Abblendlichts. Ein Absenken der horizontalen Hell-Dunkel-Grenze 20 bewirkt eine Reduzierung der Rechweite des Abblendlichtes. Ein solches automatisches System zur Steuerung der horizontalen Hell-Dunkel-Grenze 20 ist ein Fahrassistenzsystem, das auch als Lichtassistenzsystem bezeichnet wird.

Eine gewünschte Verschiebung der horizontalen Hell-Dunkel-Grenze 20 kann je nach Modell des Fahrzeugs 10 und je nach der verwendeten Technik der Scheinwerfer 18 unterschiedlich erfolgen. Insbesondere kann die horizontale Hell-Dunkel-Grenze 20 durch das Drehen einer vor einer Lichtquelle angeordneten Blendenwelle, durch das Absenken eines Schutters, durch die Aktivierung einer Leuchtweitenregulierung, durch eine Leistungsänderung einer oder mehrerer Lichtquelle und/oder das Zu- bzw. Abschalten einer oder mehrerer Lichtquellen geändert bzw. verschoben werden. Mit Hilfe der Blendenwelle können verschiedene Lichtfiguren erzeugt werden, die sowohl die unterschiedlichen Formen der Lichtverteilung als auch verschiedene horizontale Hell-Dunkel-Grenzen 20 repräsentieren. Solche Lichtfiguren sind beispielsweise aus der Schrift EP 0935728 B1 bekannt. Dabei kann zur Erzeugung von Lichtfiguren insbesondere die VARIOX® Technologie der Anmelderin verwendet werden.

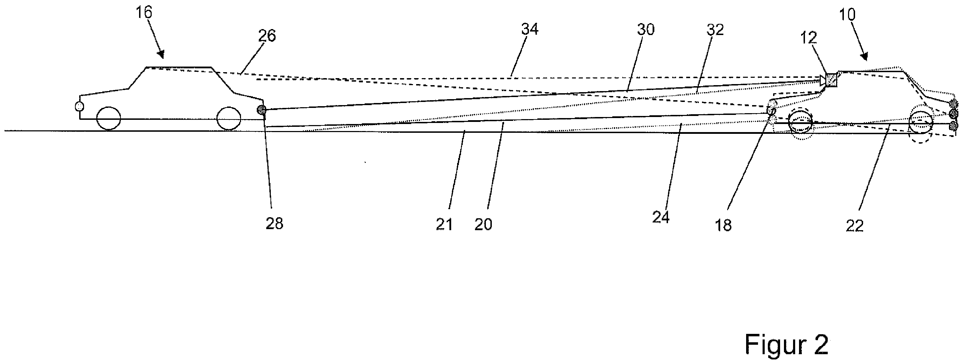

In Figur 2 ist eine schematische Darstellung der Lichtabstrahlung des zweiten Fahrzeugs 10 ohne eine Ansteuerung der Frontscheinwerfer 18 zur Veränderung der horizontalen Hell-Dunkel-Grenze 20 in verschiedenen Phasen einer Nickbewegung des zweiten Fahrzeugs 10 nach Figur 1 gezeigt. Elemente mit gleichem Aufbau oder gleicher Funktion haben dieselben Bezugszeichen. Während das zweite Fahrzeug 10 entlang des Verlaufs der Fahrbahn 21 fährt ist das Chassis 22 des Fahrzeugs 10 nicht immer parallel zur Fahrbahnebene, sondern das Fahrzeug 10 führt eine komplexe Bewegung kombiniert aus der Fahrzeugbewegung entlang der Fahrbahn 21 und zumindest einer wiederholten Nickbewegung aus. Die Nickbewegung kann beispielsweise durch unebene Fahrbahnen, Schlaglöcher, Beschleunigungs- oder Bremsvorgänge verursacht werden. Bei der Nickbewegung neigt sich das Fahrzeug 10 entweder am vorderen und/oder hinteren Ende nach unten und/oder oben. Dadurch wird ein positiver oder ein negativer Nickwinkel bewirkt. Neigt sich das Fahrzeug 10 am vorderen Ende nach unten, so entspricht dies einem positiven Nickwinkel. Neigt sich das Fahrzeug 10 dagegen am vorderen Ende nach oben, so liegt ein negativer Nickwinkel vor. Bezogen auf ein fahrzeugfestes Koordinatensystem entspricht ein positiver Nickwinkel einer Drehung um die Y-Achse im mathematisch positiven Drehsinn. Ein negativer Nickwinkel bedeutet entsprechend eine Drehung um die Y-Achse entgegen dem mathematisch positiven Sinn. Ein fahrzeugfestes Koordinatensystem ist hierbei ein rechtwinkliges Koordinatensystem mit einem Koordinatenursprung vorzugsweise im Schwerpunkt des Fahrzeugs 10, so dass die X-Achse waagerecht und nach vorne gerichtet ist und sich in der Fahrzeuglängsmittelebene befindet. Die Y-Achse steht senkrecht auf der Fahrzeuglängsmittelebene und zeigt nach links. Die Z-Achse zeigt nach oben.

Der horizontale Verlauf des Lichtabstrahlbereichs der Frontscheinwerfer 18 bei einer Nickbewegung mit positivem Nickwinkel ist in Figur 2 und den folgenden Figuren durch Punktlinien dargestellt. Der horizontale Verlauf des Lichtabstrahlbereichs der Frontscheinwerfer 18 bei einer Nickbewegung mit negativem Nickwinkel dagegen ist in Figur 2 und den folgenden Figuren durch Stichlinien dargestellt. Meistens tritt nicht nur eine Nickbewegung mit positivem oder negativem Nickwinkel auf, sondern die Nickbewegungen mit positivem Nickwinkel und die Nickbewegungen mit negativem Nickwinkel wechseln sich periodisch ab. Gründe hierfür sind zum Beispiel das Gegensteuern der Stoßdämpfer auf eine Nickbewegung oder ein entsprechender Verlauf der Fahrbahn 21. Eine Nickbewegung des Fahrzeugs 10 kann durch einen Bremsvorgang, einen Beschleunigungsvorgang oder Reaktionen des Fahrzeugs 10 auf Fahrbahnunebenheiten verursacht werden.

Werden diese Nickbewegungen des Fahrzeugs 10 nicht bei der Ansteuerung der Frontscheinwerfer 18 berücksichtigt, kann dies zu Behinderungen anderer Verkehrsteilnehmer und zu einer Gefährdung der Verkehrssicherheit führen. Die horizontale Hell-Dunkel-Grenze 20 ist durch die Steuereinheit 14 so gesteuert, dass sie ohne eine Nickbewegung des zweiten Fahrzeugs 10 auf Höhe der Rückleuchten 28 des vorausfahrenden ersten Fahrzeugs 16 auf das erste Fahrzeug 16 trifft. Bei einer Nickbewegung des zweiten Fahrzeugs 10 mit positivem Nickwinkel wird die horizontale Hell-Dunkel-Grenze abgesenkt und trifft im Ausführungsbeispiel nach Figur 2 aus Sicht des Fahrers des zweiten Fahrzeugs 10 schon vor dem ersten Fahrzeug 16 auf die Fahrbahn 21. Der Verlauf der horizontalen Hell-Dunkel-Grenze bei einer Nickbewegung mit positivem Nickwinkel ist in Figur 2 durch die Punktlinie 24 dargestellt. Der Fahrer des ersten Fahrzeugs 16 wird dadurch zwar nicht behindert, jedoch wird der vor dem zweiten Fahrzeug 10 liegende Raum nicht optimal ausgeleuchtet. Eventuelle Gefährdungen, wie beispielweise Objekte auf der Fahrbahn 21, werden dadurch gegebenenfalls erst zu spät erkannt.

Bei einer Nickbewegung des zweiten Fahrzeugs 10 um einen negativen Nickwinkel wird die horizontale Hell-Dunkel-Grenze 26 angehoben. Dadurch wird der Fahrer des ersten Fahrzeugs 16 geblendet und somit behindert. Hierdurch ist eine unmittelbare Gefährdung des Straßenverkehrs gegeben.

Zur Vermeidung dieser Gefährdung muss der Verlauf der Nickbewegung des zweiten Fahrzeugs 10 erfasst werden und der ermittelte Bewegungsverlauf muss bei der Steuerung der Frontscheinwerfer 18 des zweiten Fahrzeugs 10 berücksichtigt werden. Die Erfassung des Verlaufs der Nickbewegung des zweiten Fahrzeugs 10 kann entweder mit Hilfe der Frontkamera 12 oder mittels interner Fahrzeugdaten und der Frontkamera 12 erfolgen. Fahrzeugdaten zum Ermitteln der Nickbewegung des zweiten Fahrzeugs 10 sind beispielsweise Daten mit Informationen zur Stellung des Brems- und/oder Gaspedals, zu Beschleunigungswerten, insbesondere Messwerte von Längen- und/oder Querbeschleunigungssensoren, zur Geschwindigkeit oder zur Eintauchtiefe von Stoßdämpfern. Zusätzlich können in von der Kamera 12 aufgenommen Bildern einer fortlaufenden Bildfolge kontinuierlich Abbildungen beobachteter Objekte detektiert und die Position dieser Objekte bestimmt werden. Durch die Nickbewegung der zweiten Fahrzeugs 10 ändert sich auch die optische Achse der Kamera 12. Die optische Achse der Kamera 12 ist in Ruhestellung des zweiten Fahrzeugs 10 durch die Volllinie 30, bei einer Nickbewegung mit positivem Nickwinkel als Punktlinie 32 und bei einer Nickbewegung mit negativem Nickwinkel als Strichlinie 34 dargestellt. Durch die Änderung der Lage der optischen Achse der Kamera 12 durch die Nickbewegung des zweiten Fahrzeugs 10 ändert sich die vertikale Position der Objektabbildungen in den Bildern der aufgenommen Bildfolge. Aus der vertikalen Positionsänderung der beobachteten Objekte lässt sich die Nickwinkeländerung berechnen. Beim Ermitteln der Nickwinkeländerung können zusätzlich die Fahrzeugdaten des zweiten Fahrzeugs 10 berücksichtigt werden. Alternativ oder zusätzlich kann eine ermittelte Nickwinkeländerung mit Hilfe der Fahrzeugdaten verifiziert werden.

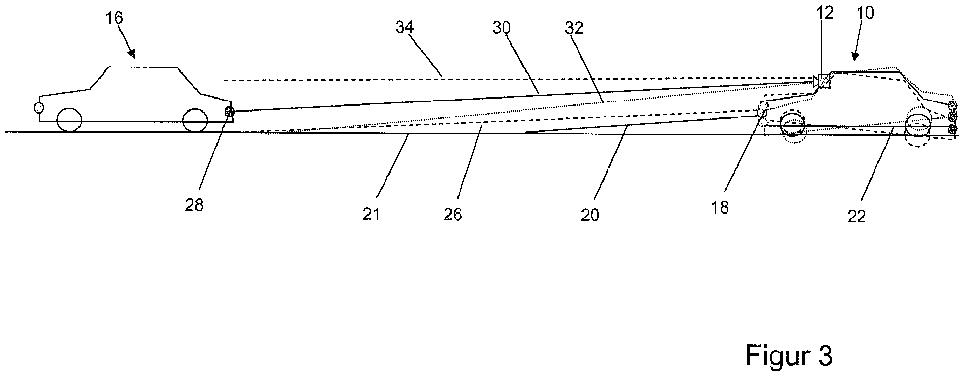

Ist die Nickwinkeländerung ermittelt worden, gibt es vorrangig drei Verfahren um eine Blendung des Fahrers des vorherfahrenden Fahrzeugs 16 und somit eine Gefährdung des Straßenverkehrs zu vermeiden. Diese Möglichkeiten werden nachfolgend unter Bezugnahme auf die Figuren 3 bis 5 näher erläutert.

In Figur 3 ist eine schematische Darstellung der Lichtabstrahlung des zweiten Fahrzeugs 10 bei einer defensiven Einstellung der Steuerung der Frontscheinwerfer 18 zur Veränderung der horizontalen Hell-Dunkel-Grenze 20 in den verschiedenen Phasen der Nickbewegung des zweiten Fahrzeugs 10 nach Figur 2 gezeigt. Die hier gezeigte defensive Einstellung der Frontscheinwerfer 18 ist die erste Variante zur Vermeidung der Blendung des Fahrers des ersten Fahrzeugs 16. Hierbei wird die horizontale Hell-Dunkel-Grenze 20 nicht wie sonst so gesteuert, dass sie in Ruhestellung des zweiten Fahrzeugs 10 auf Höhe der Rücklichter 28 des ersten Fahrzeugs 16 auf das erste Fahrzeug 16 trifft, sondern die horizontale Hell-Dunkel-Grenze 20 wird so weit wie möglich in Richtung der Fahrbahn 21 abgesenkt. Hierdurch wird erreicht, dass auch bei einer Nickbewegung mit negativem Nickwinkel die horizontale Hell-Dunkel-Grenze 26 aus Sicht des Fahrers des zweiten Fahrzeugs 10 schon vor dem ersten Fahrzeug 16 auf die Fahrbahn 21 trifft. Somit wird eine Blendung des Fahrers des ersten Fahrzeugs 16 vermieden, hat aber zur Folge, dass der vor dem zweiten Fahrzeug 10 liegende Raum nicht optimal ausgeleuchtet wird.

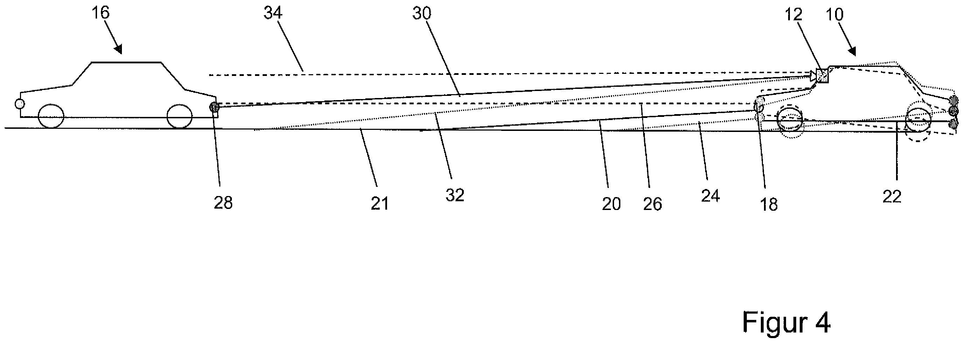

In Figur 4 ist eine schematische Darstellung der Lichtabstrahlung des zweiten Fahrzeugs 10 bei einer Einstellung der Steuerung der Frontscheinwerfer 18 zur Veränderung der horizontalen Hell-Dunkel-Grenze 20, bei der die horizontale Lichtabstrahlung um den Betrag der Nickwinkelamplitude reduziert wird, in verschiedenen Phasen der Nickbewegung nach Figur 2 gezeigt. Die Nickwinkelamplitude stellt die maximale Abweichung aus der Ruhestellung des Fahrzeugs 10 dar, wobei bei der Steuerung der Frontscheinwerfer 18 des Fahrzeugs 10 nur Abweichungen bei negativem Nickwinkel zu berücksichtigen sind. Die Ruhestellung ist seinerseits wiederum dadurch gekennzeichnet, dass das Chassis 22 parallel zur Fahrbahn 21 ist. Die Reduktion der Lichtverteilung der Scheinwerfer 18 kann beispielsweise durch eine Leuchtweitenregulierung erfolgen. Durch diese Variante wird erreicht, dass bei einer Nickbewegung des zweiten Fahrzeugs 10 mit negativem Nickwinkel die horizontale Hell-Dunkel-Grenze 26 so verläuft, dass sie auf Höhe der Rücklichter 28 des ersten Fahrzeugs 16 auf das erste Fahrzeug 16 trifft. Hierdurch wird eine Blendung des Fahrers des ersten Fahrzeugs 16 vermieden. Des Weiteren wird somit genau in dem Moment, in dem das Fahrzeug 10 sich um den betragsmäßig maximalen negativen Nickwinkel neigt, eine optimale Ausleuchtung des Raums vor dem zweiten Fahrzeug 10 erreicht. In allen anderen Phasen der Nickbewegung trifft die horizontale Hell-Dunkel-Grenze 20, 24 aus Sicht des Fahrers des zweiten Fahrzeugs 10 schon vor dem ersten Fahrzeug 16 auf die Fahrbahn 21, so dass der vor dem zweiten Fahrzeug 10 liegenden Raum nicht optimal ausgeleuchtet wird.

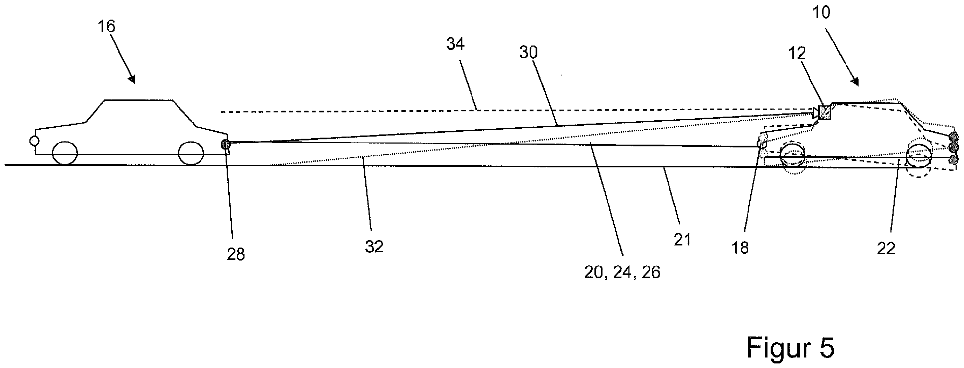

In Figur 5 ist eine schematische Darstellung der Lichtabstrahlung des zweiten Fahrzeugs 10 bei einer hochdynamischen Einstellung der Steuerung der Frontscheinwerfer 18 zur Veränderung der horizontalen Hell-Dunkel-Grenze 20, um die Nickbewegung in verschiedenen Phasen eines Nickvorgangs nach Figur 2 auszugleichen, gezeigt. Bei dieser Variante, die aber nicht Teil der Erfindung ist, wird bei der Steuerung der Frontscheinwerfer 18 immer der aktuelle Nickwinkel subtrahiert, so dass in allen Phasen der Nickbewegung die horizontale Hell-Dunkel-Grenze 20, 24, 26 so verläuft, dass sie auf Höhe der Rücklichter 28 des ersten Fahrzeugs 16 auf das erste Fahrzeug 16 trifft. Hierdurch wird während aller Phasen der Nickbewegung die optimale Ausleuchtung des Raumes vor dem zweiten Fahrzeug 10 erreicht und eine Blendung des Fahrers des ersten Fahrzeugs 16 und somit eine Gefährdung des Straßenverkehrs vermieden.

Die in den Ausführungsbeispielen beschriebenen Nickbewegungen der Fahrzeuge sind Nickwinkeländerungen der Karosserie des jeweiligen Fahrzeugs in Bezug auf die waagerechte X-Achse des Fahrzeugkoordinatensystems.

## Patentansprüche

1. Verfahren zum Steuern der Lichtabgabe mindestens eines Frontscheinwerfers eines Fahrzeugs;
bei dem mit Hilfe einer Bilderfassungseinheit (12) mehrere Bilder mit Abbildungen mindestens eines Objekts (16) nacheinander als Bildfolge erfasst werden,
die Position des Objekts (16) in mindestens zwei der nacheinander als Bildfolge aufgenommenen Bildern ermittelt wird,
mit Hilfe der ermittelten Positionen eine durch die Fahrzeugbewegung bewirkte Nickwinkeländerung des Fahrzeugs (10) ermittelt wird;
die Lichtabgabe des Frontscheinwerfers (18) des Fahrzeugs abhängig von der ermittelten Nickwinkeländerung gesteuert wird, und
bei dem die Positionsabweichung der Bildposition des Objekts (16), die aus der Bewegung des Fahrzeugs (10) in Fahrtrichtung zwischen den Bildaufnahmezeitpunkten von zwei nacheinander aufgenommenen Bildern der Bildfolge resultiert, ermittelt wird, und dass diese Positionsabweichung beim Ermitteln der Nickwinkeländerung des Fahrzeugs (10) bzw. beim Ermitteln einer Positionsabweichung zwischen den Positionen des Objekts (16) in den Bildern berücksichtigt wird, **dadurch gekennzeichnet,**
**dass** der Abstrahlwinkel der von dem mindestens einen Frontscheinwerfer (18) des Fahrzeugs (10) abgestrahlten Lichtstrahlen auf einen voreingestellten Wert abgesenkt wird, bei dem auch bei einer Nickbewegung keine Beeinträchtigung anderer Verkehrsteilnehmer zu erwarten ist.

2. Verfahren nach Anspruch 1, **dadurch gekennzeichnet, dass** ausgehend von mindestens drei nacheinander als Bildfolge aufgenommenen Bildern mit Hilfe der in den Bildern ermittelten Position des Objekts (16) im jeweiligen Bild je eine Nickwinkeländerung des Fahrzeugs (10) zwischen den Bildaufnahmezeitpunkten der jeweiligen Bilder ermittelt wird.

3. Verfahren nach Anspruch 2, **dadurch gekennzeichnet, dass** ausgehend von den mindestens zwei ermittelten Nickwinkeländerungen der Verlauf der Nickwinkeländerung, mindestens eine Amplitude eines Schwingungsverlaufs der Nickwinkeländerung, der Verlauf der Amplituden des Schwingungsverlaufs der Nickwinkeländerung oder die maximale Amplitude des Schwingungsverlaufs der Nickwinkeländerung ermittelt wird.

4. Verfahren nach einem der vorhergehenden Ansprüche, **dadurch gekennzeichnet, dass** zum Ermitteln der Nickwinkeländerung oder zur Überprüfung der Plausibilität einer ermittelten Nickwinkeländerung Fahrzeugdaten verarbeitet werden.

5. Verfahren nach Anspruch 4, **dadurch gekennzeichnet, dass** die Fahrzeugdaten Informationen über die Betätigung des Gaspedals, die Betätigung des Bremspedals, die Stoßdämpferbewegung mindestens eines Stoßdämpfers, die Fahrzeuggeschwindigkeit, Beschleunigungs- und/oder Verzögerungswerte des Fahrzeugs (10) umfassen.

6. Verfahren nach einem der vorhergehenden Ansprüche, **dadurch gekennzeichnet, dass** in einem ersten Bild der erfassten Bildfolge ein Objekt (16) detektiert und klassifiziert wird und dass ein Objektverfolgungsverfahren für das Objekt (16) dann gestartet wird, wenn das Objekt als zur Bestimmung der Nickwinkeländerung geeignetes Objekt (16) klassifiziert worden ist.

7. Verfahren nach einem der vorhergehenden Ansprüche, **dadurch gekennzeichnet, dass** die Positionsabweichung der Bildposition des Objekts (16), die aus der Bewegung des Fahrzeugs (10) in Fahrtrichtung zwischen den Bildaufnahmezeitpunkten von zwei nacheinander aufgenommenen Bildern der Bildfolge resultiert, als Korrekturwert beim Ermitteln einer Positionsabweichung zwischen den Positionen des Objekts (16) zwischen den Bildaufnahmezeitpunkten der zwei Bilder verwendet wird.

8. Verfahren nach einem der vorhergehenden Ansprüche, **dadurch gekennzeichnet, dass** die Bilderfassungseinheit (12) kontinuierlich Bilder eines Bereichs vor dem Fahrzeug (10) als Bildfolge erfasst und zumindest ein Teil der Bilddaten dieser Bilder zur Ermittlung der Nickwinkeländerung des Fahrzeugs (10) genutzt werden.

9. Verfahren nach einem der vorhergehenden Ansprüche, **dadurch gekennzeichnet, dass** zum Ermitteln der Position des Objekts (16) die Änderung der Position der Abbildung des Objekts (16) auf einer eine X-Achse und eine Y-Achse aufweisenden Matrix eines Bilderfassungssensors der Bilderfassungseinheit (12) in mindestens zwei nacheinander aufgenommenen Bildern einer Bildfolge ermittelt wird, wobei die Änderung der Position der Abbildung des Objekts (16) in Richtung der Y-Achse des Bilderfassungssensors ermittelt wird, wobei die Y-Achse des Bilderfassungssensors im wesentlichen mit der Z-Achse eines Fahrzeugkoordinatensystems übereinstimmt oder parallel zu dieser Z-Achse verläuft oder die Abweichung der Ausrichtung der Y-Achse des Bilderfassungssensors und der Z-Achse eines Fahrzeugkoordinatensystems bekannt ist und bei der Ermittlung der Position und/oder bei der Positionsänderung des Objekts (16) berücksichtigt wird.

10. Verfahren nach einem der vorhergehenden Ansprüche, **dadurch gekennzeichnet, dass** die Lichtabstrahlung des mindestens einen Frontscheinwerfers (18) des Fahrzeugs (10) eine horizontale Hell-Dunkel-Grenze erzeugt, und dass abhängig von der ermittelten Nickwinkeländerung die horizontale Hell-Dunkel-Grenze derart dauerhaft abgesenkt wird, dass auch bei der betragsmäßig größten in einem voreingestellten Zeitraum ermittelten Amplitude der Schwingung des Nickwinkels bei negativem Nickwinkel die horizontale Hell-Dunkel-Grenze soweit abgesenkt ist, dass eine voreingestellte horizontale Hell-Dunkel-Grenze nicht überschritten wird, wobei ein negativer Nickwinkel vorliegt, wenn sich das Fahrzeug am vorderen Enden nach oben neigt.

11. Verfahren nach Anspruch 10, **dadurch gekennzeichnet, dass** die voreingestellte horizontale Hell-Dunkel-Grenze in Höhe der Rückleuchten eines vorausfahrenden Fahrzeugs (16) oder in Höhe der Frontscheinwerfer eines entgegenkommenden Fahrzeugs liegt.

12. Verfahren nach einem der vorhergehenden Ansprüche 1 bis 9, **dadurch gekennzeichnet, dass** mit Hilfe mehrerer fortlaufend erfasster Bilder der Schwingungsverlauf des Nickwinkels ermittelt wird dass die Lichtabstrahlung des mindestens einen Frontscheinwerfers (18) des Fahrzeugs (10) eine horizontale Hell-Dunkel-Grenze erzeugt, und dass der mindestens eine Frontscheinwerfer (18) des Fahrzeugs (10) so angesteuert wird, dass die horizontale Hell-Dunkel-Grenze nicht oder nur in einem zulässigen Bereich von einer voreingestellten horizontalen Hell-Dunkel-Grenze abweicht.

13. Vorrichtung zum Steuern der Lichtabgabe mindestens eines Frontscheinwerfers eines Fahrzeugs;
mit einer Bilderfassungseinheit (12), die mehrere Bilder mit Abbildungen mindestens eines Objekts (16) nacheinander als Bildfolge erfasst und Bilddaten der Bilder zur Weiterverarbeitung bereitstellt,
mit einer Verarbeitungseinheit (14, 17), die die bereitgestellten Bilddaten verarbeitet,
wobei die Verarbeitungseinheit (14, 17) die Position des Objekts in mindestens zwei der nacheinander als Bildfolge aufgenommenen Bilder ermittelt,
wobei die Verarbeitungseinheit (14, 17) mit Hilfe der ermittelten Positionen eine durch die Fahrzeugbewegung bewirkte Nickwinkeländerung des Fahrzeugs (10) ermittelt,
wobei die Verarbeitungseinheit die Lichtabgabe des mindestens einen Frontscheinwerfers (18) abhängig von der ermittelten Nickwinkeländerung steuert, und
wobei die Verarbeitungseinheit (14, 17) die Positionsabweichung der Bildposition des Objekts (16), die aus der Bewegung des Fahrzeugs (10) in Fahrtrichtung zwischen den Bildaufnahmezeitpunkten von zwei nacheinander aufgenommenen Bildern der Bildfolge resultiert, ermittelt, und dass die Verarbeitungseinheit (14, 17) diese Positionsabweichung beim Ermitteln der Nickwinkeländerung des Fahrzeugs (10) bzw. beim Ermitteln einer Positionsabweichung zwischen den Positionen des Objekts (16) in den Bildern berücksichtigt, **dadurch gekennzeichnet,**
**dass** beim Ermitteln einer Nickwinkeländerung des Fahrzeugs (10) die Verarbeitungseinheit (14, 17) die Lichtabgabe des mindestens einen Frontscheinwerfers (18) derart steuert, dass der Abstrahlwinkel der von dem mindestens einen Frontscheinwerfer (18) des Fahrzeugs (10) abgestrahlten Lichtstrahlen auf einen voreingestellten Wert abgesenkt wird, bei dem auch bei einer Nickbewegung keine Beeinträchtigung anderer Verkehrsteilnehmer zu erwarten ist.

## Claims

1. Method for controlling the light emission of at least one front headlight of a vehicle,
in which a plurality of images with imaged representations of at least one object (16) are captured successively as a sequence of images using an image capturing unit (12),
the position of the object (16) in at least two of the images that have been recorded successively as an image sequence is ascertained,
a pitch angle change of the vehicle (10) caused by the vehicle movement is ascertained using the ascertained positions,
the light emission of the front headlight (18) of the vehicle is controlled in dependence on the ascertained pitch angle change, and
in which the position deviation of the image position of the object (16), which results from the movement of the vehicle (10) in the driving direction between the image recording time points of two successively recorded images of the image sequence, is ascertained and said position deviation is taken into account when ascertaining the pitch angle change of the vehicle (10) or when ascertaining a position deviation between the positions of the object (16) in the images, **characterized in that** the beam angle of the light beams emitted by the at least one front headlight (18) of the vehicle (10) is lowered to a preset value at which no impairment of other road users is expected even in the case of a pitch movement.

2. Method according to Claim 1, **characterized in that** in the respective image in each case one pitch angle change of the vehicle (10) between the image recording time points of the respective images is ascertained on the basis of at least three images recorded successively as an image sequence using the position of the object (16) that has been ascertained in the images.

3. Method according to Claim 2, **characterized in that** the profile of the pitch angle change, at least one amplitude of a waveform of the pitch angle change, the profile of the amplitudes of the waveform of the pitch angle change or the maximum amplitude of the waveform of the pitch angle change is ascertained on the basis of the at least two ascertained pitch angle changes.

4. Method according to one of the preceding claims, **characterized in that** vehicle data are processed for ascertaining the pitch angle change or for checking the plausibility of an ascertained pitch angle change.

5. Method according to Claim 4, **characterized in that** the vehicle data comprise information relating to the use of the accelerator pedal, the use of the brake pedal, the shock absorber movement of at least one shock absorber, the vehicle speed, the acceleration values and/or deceleration values of the vehicle (10).

6. Method according to one of the preceding claims, **characterized in that** an object (16) is detected and classified in a first image of the captured image sequence and **in that** an object tracking method for the object (16) is started if the object has been classified as being an object (16) that is suitable for determining the pitch angle change.

7. Method according to one of the preceding claims, **characterized in that** the position deviation of the image position of the object (16), which results from the movement of the vehicle (10) in the driving direction between the image recording time points of two successively recorded images of the image sequence, is used as a correction value when ascertaining a position deviation between the positions of the object (16) between the image recording time points of the two images.

8. Method according to one of the preceding claims, **characterized in that** the image capturing unit (12) continuously captures images of a region in front of the vehicle (10) as an image sequence and at least some of the image data of said images are used to ascertain the pitch angle change of the vehicle (10).

9. Method according to one of the preceding claims, **characterized in that**, for ascertaining the position of the object (16), the change in the position of the imaged representation of the object (16) on a matrix of an image capturing sensor of the image capturing unit (12) having an X-axis and a Y-axis in at least two successively recorded images of an image sequence is ascertained, wherein the change in the position of the imaged representation of the object (16) in the direction of the Y-axis of the image capturing sensor is ascertained, wherein the Y-axis of the image capturing sensor substantially coincides with the Z-axis of a vehicle coordinate system or is parallel to said Z-axis, or the deviation of the orientation of the Y-axis of the image capturing sensor and of the Z-axis of a vehicle coordinate system is known and taken into account in the ascertainment of the position and/or in the position change of the object (16).

10. Method according to one of the preceding claims, **characterized in that** the light emission of the at least one front headlight (18) of the vehicle (10) produces a horizontal cut-off, and **in that**, in dependence on the ascertained pitch angle change, the horizontal cut-off is continuously lowered such that even in the case of the amplitude of the wave of the pitch angle that has the greatest absolute value within a preset time period for a negative pitch angle the horizontal cut-off has been lowered to an extent such that a preset horizontal cut-off is not exceeded, wherein a negative pitch angle is present if the vehicle points upwards at the front end.

11. Method according to Claim 10, **characterized in that** the preset horizontal cut-off is located at the height of the tail lights of the vehicle (16) driving in front or at the height of the front headlights of an oncoming vehicle.

12. Method according to one of the preceding Claims 1 to 9, **characterized in that** the waveform of the pitch angle is ascertained using a plurality of continuously captured images, **in that** the light emission of the at least one front headlight (18) of the vehicle (10) produces a horizontal cut-off, and **in that** the at least one front headlight (18) of the vehicle (10) is controlled such that the horizontal cut-off does not deviate, or deviates only within an admissible range, from a preset horizontal cut-off.

13. Apparatus for controlling the light emission of at least one front headlight of the vehicle,
having an image capturing unit (12), which successively captures a plurality of images with imaged representations of at least one object (16) as an image sequence and provides image data of the images for further processing,
having a processing unit (14, 17), which processes the provided image data,
wherein the processing unit (14, 17) ascertains the position of the object in at least two of the images recorded successively as an image sequence,
wherein the processing unit (14, 17) ascertains a pitch angle change of the vehicle (10) caused by the vehicle movement using the ascertained positions,
wherein the processing unit controls the light emission of the at least one front headlight (18) in dependence on the ascertained pitch angle change, and
wherein the processing unit (14, 17) ascertains the position deviation of the image position of the object (16), which results from the movement of the vehicle (10) in the driving direction between the image recording time points of two successively recorded images of the image sequence, and in that the processing unit (14, 17) takes into account this position deviation when ascertaining the pitch angle change of the vehicle (10) or when ascertaining a position deviation between the positions of the object (16) in the images, **characterized**
**in that** when ascertaining the pitch angle change of the vehicle (10), the processing unit (14, 17) controls the light emission of the at least one front headlight (18) such that the beam angle of the light beams emitted by the at least one front headlight (18) of the vehicle (10) is lowered to a preset value at which no impairment of other road users is expected even in the case of a pitch movement.

## Revendications

1. Procédé de commande de l'émission de lumière d'au moins un phare frontal d'un véhicule ;
dans lequel, à l'aide d'une unité d'acquisition d'images (12), on acquiert successivement plusieurs images sous forme de séquence d'images avec des formations d'images d'au moins un objet (16),
on détermine la position de l'objet (16) dans au moins deux des images successives enregistrées sous forme de séquence d'images,
à l'aide des positions déterminées, on détermine une variation de l'angle de tangage du véhicule (10) provoquée par le mouvement du véhicule ;
on commande l'émission de lumière du phare frontal (18) du véhicule en fonction de la variation déterminée de l'angle de tangage, et
dans lequel on détermine l'écart de position de la position d'image de l'objet (16) résultant du mouvement du véhicule (10) dans le sens de la marche entre les instants d'enregistrement d'image de deux images enregistrées consécutivement de la séquence d'images, et en ce qu'on tient compte dudit écart de position lors de la détermination de la variation de l'angle de tangage du véhicule (10) ou lors de la détermination d'un écart de position entre les positions de l'objet (16) dans les images,
**caractérisé en ce qu'**on abaisse l'angle de rayonnement des faisceaux lumineux émis par ledit au moins un phare frontal (18) du véhicule (10) à une valeur prédéfinie à laquelle aucune gêne pour les autres usagers de la route n'est à prévoir, même en cas de mouvement de tangage.

2. Procédé selon la revendication 1, **caractérisé en ce que**, à partir d'au moins trois images enregistrées successivement sous forme de séquence d'images, on détermine respectivement une variation d'angle de tangage du véhicule (10) entre les instants d'enregistrement d'images des images respectives à l'aide de la position de l'objet (16) déterminée dans les images.

3. Procédé selon la revendication 2, **caractérisé en ce que**, à partir desdites au moins deux variations déterminées de l'angle de tangage, on détermine la courbe de la variation d'angle de tangage, au moins une amplitude d'une courbe d'oscillation de la variation d'angle de tangage, la courbe des amplitudes de la courbe d'oscillation de la variation d'angle de tangage ou l'amplitude maximale de la courbe d'oscillation de la variation d'angle de tangage.

4. Procédé selon l'une des revendications précédentes, **caractérisé en ce qu'**on traite des données de véhicule pour déterminer la variation d'angle de tangage ou pour vérifier la plausibilité d'une variation d'angle de tangage déterminée.

5. Procédé selon la revendication 4, **caractérisé en ce que** les données de véhicule comprennent des informations concernant l'actionnement de la pédale d'accélérateur, l'actionnement de la pédale de frein, le mouvement d'au moins un amortisseur, la vitesse du véhicule, des valeurs d'accélération et/ou de décélération du véhicule (10).

6. Procédé selon l'une des revendications précédentes, **caractérisé en ce qu'**on détecte un objet (16) et on le classe dans une première image de la séquence d'images acquise, et **en ce qu'**on lance un procédé de poursuite d'objet pour l'objet (16) lorsque l'objet (16) a été classé comme étant approprié pour déterminer la variation d'angle de tangage.

7. Procédé selon l'une des revendications précédentes, **caractérisé en ce qu'**on utilise l'écart de position de la position d'image de l'objet (16) résultant du mouvement du véhicule (10) dans le sens de la marche entre les instants d'enregistrement d'images de deux images enregistrées successivement de la séquence d'images, en tant que valeur de correction lors de la détermination d'un écart de position entre les positions de l'objet (16) entre les instants d'enregistrement d'images des deux images.

8. Procédé selon l'une des revendications précédentes, **caractérisé en ce que** l'unité d'acquisition d'images (12) acquiert en continu des images d'une zone située à l'avant du véhicule (10) sous forme de séquence d'images et au moins une partie des données d'images desdites images est utilisée pour déterminer la variation d'angle de tangage du véhicule (10).

9. Procédé selon l'une des revendications précédentes, **caractérisé en ce que**, pour déterminer la position de l'objet (16), on détermine la variation de la position de formation d'image de l'objet (16) sur une matrice, présentant un axe X et un axe Y, d'un capteur d'acquisition d'images de l'unité d'acquisition d'images (12) dans au moins deux images enregistrées successivement d'une séquence d'images, dans lequel la variation de la position de formation d'image de l'objet (16) est déterminée dans la direction de l'axe Y du capteur d'acquisition d'images, dans lequel l'axe Y du capteur d'acquisition d'images coïncide sensiblement avec l'axe Z d'un système de coordonnées du véhicule ou s'étend parallèlement audit axe Z ou on connaît l'écart entre l'orientation de l'axe Y du capteur d'acquisition d'images et l'axe Z d'un système de coordonnées du véhicule et le prend en compte lors de la détermination de la position et/ou de la variation de position de l'objet (16).

10. Procédé selon l'une des revendications précédentes, **caractérisé en ce que** le rayonnement lumineux dudit au moins un phare frontal (18) du véhicule (10) génère une ligne de coupure horizontale, et
**en ce que**, selon la variation d'angle de tangage déterminée, la ligne de coupure horizontale est abaissée de façon permanente de sorte que, même dans le cas de la plus grande amplitude de l'oscillation de l'angle de tangage déterminée au cours d'une période de temps prédéterminée, la ligne de coupure horizontale soit abaissée à un point tel, lorsque l'angle de tangage est négatif, qu'une ligne de coupure horizontale prédéfinie ne soit pas dépassée, dans lequel l'angle de tangage est négatif lorsque le véhicule est incliné vers le haut aux extrémités avant.

11. Procédé selon la revendication 10, **caractérisé en ce que** la ligne de coupure horizontale prédéfinie se situe à la hauteur des feux arrière d'un véhicule (16) circulant vers l'avant ou au niveau des phares frontaux d'un véhicule circulant en sens inverse.

12. Procédé selon l'une des revendications 1 à 9 précédentes, **caractérisé en ce que** la courbe d'oscillation de l'angle de tangage est déterminée à l'aide d'une pluralité d'images acquises en continu, **en ce que** l'émission de lumière dudit au moins un phare frontal (18) du véhicule (10) produit une ligne de coupure horizontale, et **en ce que** ledit au moins un phare frontal (18) du véhicule (10) est commandé de telle manière que la limite horizontale ne s'écarte pas d'une ligne de coupure horizontale prédéterminée ou ne s'écarte d'une ligne de coupure horizontale prédéterminée que dans une plage acceptable.

13. Dispositif de commande de l'émission lumineuse d'au moins un phare frontal d'un véhicule ; comportant une unité d'acquisition d'images (12) qui acquiert plusieurs images successivement sous forme de séquence d'images avec des formation d'images d'au moins un objet (16) et qui fournit des données d'images des images en vue d'un traitement ultérieur,
une unité de traitement (14, 17) qui traite les données d'images fournies,
dans lequel l'unité de traitement (14, 17) détermine la position de l'objet dans au moins deux des images enregistrées successivement sous forme de séquence d'images,
dans lequel l'unité de traitement (14, 17) utilise les positions déterminées pour déterminer une variation d'angle de tangage du véhicule (10) provoquée par le mouvement du véhicule,
dans lequel l'unité de traitement commande l'émission lumineuse dudit au moins un phare frontal (18) en fonction de la variation d'angle de tangage déterminée, et
dans lequel l'unité de traitement (14, 17) détermine l'écart de position de la position d'image de l'objet (16) résultant du mouvement du véhicule (10) dans le sens de la marche entre les instants d'enregistrement d'images de deux images enregistrées successivement de la séquence d'images, et en ce que l'unité de traitement (14, 17) tient compte dudit écart de position lors de la détermination de la variation d'angle de tangage du véhicule (10) ou lors de la détermination d'un écart de position entre les positions de l'objet (16) dans les images,
**caractérisé en ce que**, lors de la détermination d'une variation d'angle de tangage du véhicule (10), l'unité de traitement (14, 17) commande l'émission lumineuse dudit au moins un phare frontal (18) de manière à ce que l'angle de rayonnement des faisceaux lumineux émis par ledit au moins un phare frontal (18) du véhicule (10) soit abaissé à une valeur prédéfinie à laquelle aucune gêne pour les autres usagers de la route n'est à prévoir, même en cas de mouvement de tangage.
